# DEMANDE DE BREVET EUROPEEN

(11) **EP 3 751 171 A1**
(43) Date de publication de la demande: **16.12.2020**
(21) Numéro de dépôt: 20179480.7
(22) Date de dépôt: 11.06.2020
(51) Int. Cl.: F16G 1/10, F16G 1/28, F16G 3/02, F16G 3/04, F16G 1/12, F16G 1/16

(54) **COURROIE DE TRANSMISSION DE PUISSANCE**

(30) Priorité: 13.06.2019 FR 1906272
(71) Demandeur: IMAGINE Société Civile, 68290 Masevaux-Niederbruck (FR)
(72) Inventeur: FREY, Pierre-Régis, 68460 LUTTERBACH (FR)
(74) Mandataire: Cabinet Laurent & Charras

(57) **Abrégé**

L'invention concerne une courroie crantée (10) de transmission de puissance comportant un tronçon de bande (15) délimité par deux extrémités (16, 17) et un dispositif de jonction (20) démontable pour assembler lesdites extrémités et former une courroie ayant deux états d'utilisation: un état ouvert et un état fermé. Ladite courroie est remarquable en ce que sa zone de jonction (ZJ) est compacte et ne s'étend que sur une seule dent (14) de la courroie, et que son dispositif de jonction (20) est contenu dans cette seule dent (14) et comporte deux tiges de verrouillage (23) qui s'étendent transversalement dans l'épaisseur de ladite zone de jonction (ZJ). Le dispositif de jonction (20) peut comporter un ou plusieurs maillons de liaison (21) en fonction de la largeur de ladite courroie (10). Ainsi, le dispositif de jonction (20) n'a aucune influence sur le pas (P) de ladite courroie.

## Description

### Domaine technique

La présente invention concerne une courroie de transmission de puissance comportant sur au moins l'une de ses faces des dents séparées d'un pas régulier pour former une face crantée agencée pour engrener des poulies dentées d'une transmission mécanique, ladite courroie comportant au moins un tronçon de bande délimité par deux extrémités, ledit tronçon de bande étant pourvu de ladite au moins une face crantée et d'une âme de traction noyée dans son épaisseur pour obtenir une courroie renforcée, ladite courroie comportant en outre au moins une zone de jonction comportant un dispositif de jonction au moins en partie démontable, agencé pour assembler entre-elles les extrémités dudit tronçon de bande et former une courroie ayant deux états d'utilisation: un état ouvert dans lequel les extrémités dudit tronçon de bande ne sont pas assemblées, et un état fermé dans lequel les extrémités dudit tronçon de bande sont assemblées par ledit dispositif de jonction.

### Technique antérieure

Les courroies crantées sont de plus en plus utilisées comme organe de transmission de puissance en remplacement notamment des chaînes mécaniques constituées d'un assemblage d'une suite de maillons métalliques servant à transmettre un mouvement sans glissement. Ces courroies crantées sont réalisées dans des matériaux souples, tels que du polyuréthane, du caoutchouc de type néoprène®, ou similaire, et renforcées par des câbles en acier, Kevlar®, carbone, fibre de verre ou similaire. Elles présentent de de nombreux avantages : elles sont économiques, légères et silencieuses, elles amortissent les vibrations, chocs et à-coups de transmission, elles sont propres et ne nécessitent aucun entretien d'où un gain de temps, elles ne déraillent pas, elles bénéficient en plus d'une durée de vie nettement supérieure au système de transmission classique par chaine, tout en offrant des performances mécaniques similaires à celles d'une chaîne. Elles présentent toutefois un inconvénient majeur lié au fait qu'elles sont fabriquées en boucle fermée sans fin, sans possibilité d'ouverture, ce qui génère des contraintes et des problèmes au montage comme au démontage. On les trouve dans des applications très diverses, qui vont du véhicule à l'industrie, pour lesquelles les contraintes en termes de largeur, de vitesse et de puissance sont très différentes, d'où des difficultés supplémentaires en termes de conception et de fabrication.

Les publications FR 1 195 056 A, US 2003/146072 A1, US 2018/010667 A1, EP 1 333 193 A1, EP 1 967 758 A2, JP S59 77146 A proposent des solutions de courroies crantées qui sont pourvues d'un dispositif de jonction permettant d'ouvrir et de fermer la courroie pour faciliter son montage et son démontage. Toutefois, les solutions décrites ne sont pas satisfaisantes à plusieurs titres. Selon la conception de la courroie et/ou du dispositif de jonction, si le dispositif de jonction s'étend entre deux dents consécutives, alors la courroie ne peut plus fléchir entre ces deux dents et le pas n'est plus respecté ; si les câbles de traction ne sont pas situés dans le plan de la fibre neutre de la courroie et qu'ils sont rigides, alors la courroie ne peut pas fléchir et n'est pas opérationnelle ; si les câbles de traction ne sont pas situés dans le plan de la fibre neutre de la courroie et qu'ils sont flexibles, alors le pas de la courroie sera fonction de l'effort transmis et ne sera pas constant rendant l'engrenage avec des poulies dentées impossible ; si le dispositif de jonction verrouille plusieurs dents successives, alors la courroie ne peut pas s'enrouler dans sa zone de jonction et se dégrade rapidement ; si le dispositif de jonction crée une discontinuité mécanique avec l'âme de traction de la courroie, alors cette courroie aura une résistance à la traction médiocre interdisant son utilisation notamment dans le domaine du véhicule ; si le dispositif de jonction ne permet pas de respecter le pas entre les dents des extrémités de la courroie, alors la courroie aura une usure rapide et prématurée, avec des risques de dégradation connexes.

### Présentation de l'invention

La présente invention vise à pallier ces inconvénients en proposant une courroie crantée pourvue d'un dispositif de jonction compact et démontable, la courroie et son dispositif de jonction étant conçus pour réduire l'emprise du dispositif de jonction sur la courroie et ainsi ne pas modifier les points d'inflexion qui sont naturellement situés entre les dents de la courroie. Les buts recherchés sont principalement d'éliminer les jeux induits par le dispositif de jonction sur le pas de la courroie, de respecter un pas régulier et constant entre les dents de la courroie même dans la zone de jonction, de garantir un engrènement parfait avec des poulies d'une transmission mécanique quels que soient les efforts transmis, de supprimer l'usure dans le dispositif de jonction due à la rotation relative entre les pièces constitutives, et de respecter le cahier des charges lié à une courroie de transmission de puissance, tel que montage et démontage rapides, transmission d'efforts importants, stabilité dimensionnelle, sans allongement donc sans glissement, très flexible pour s'adapter à tout diamètre de poulies, sans relief dans la zone de jonction, et pouvant être guidée par tout moyen latéral et/ou central.

Dans ce but, l'invention concerne une courroie du genre indiqué en préambule, caractérisée en ce que ladite au moins une zone de jonction s'étend sur une seule dent de la courroie, et en ce que ledit dispositif de jonction est contenu dans ladite seule dent et comporte deux tiges de verrouillage qui s'étendent transversalement dans l'épaisseur de la seule dent de ladite zone de jonction.

Ainsi, le dispositif de jonction étant contenu dans une des dents de la courroie n'a pas d'influence sur le pas de la courroie, de sorte que le pas est constant et uniforme sur toute la longueur de la courroie, y compris dans sa zone de jonction.

Les extrémités de ladite bande matière comportent à cet effet chacune une partie de la seule dent de ladite zone de jonction.

Dans une première forme de réalisation, les extrémités dudit tronçon de bande sont droites et comportent chacune une demi-dent permettant de reconstituer la seule dent de la zone de jonction lorsque lesdites extrémités sont assemblées.

Dans ce cas, ledit dispositif de jonction comporte au moins un maillon de liaison pourvu de deux œillets et deux tiges de verrouillage, et les extrémités dudit tronçon de bande comportent chacun au moins une encoche débouchante dans ladite zone de jonction pour former un logement de réception dudit au moins un maillon de liaison, et un orifice transversal pour recevoir une des tiges de verrouillage dudit dispositif de jonction et solidariser ledit au moins un maillon de liaison auxdites extrémités.

Ladite au moins une encoche est avantageusement disposée à l'intérieur de la largeur dudit tronçon de bande.

En outre et selon la largeur de ladite courroie, ledit dispositif de jonction peut comporter un nombre X de maillons de liaison et deux tiges de verrouillage, et les extrémités dudit tronçon de bande peuvent comporter chacune un nombre X d'encoches parallèles.

Ledit maillon de liaison peut être choisi parmi un maillon de liaison fermé pourvu de deux œillets fermés, un maillon de liaison semi-ouvert pourvu d'un œillet fermé et d'un œillet ouvert, et un maillon de liaison ouvert pourvu de deux œillets ouverts.

Selon les variantes de réalisation, ledit dispositif de jonction peut comporter au moins une tige de verrouillage fixe, solidarisée à l'une des extrémités dudit tronçon de bande.

Dans une seconde forme de réalisation, les extrémités dudit tronçon de bande comportent chacune une dent découpée pour former une denture d'emboitement, lesdites dentures d'emboitement ayant une forme complémentaire permettant de reconstituer la seule dent de ladite zone de jonction lorsque lesdites extrémités sont assemblées.

Dans ce cas, ledit dispositif de jonction comporte deux tiges de verrouillage, et lesdites dentures d'emboitement comportent chacune deux orifices transversaux s'étendant sur deux niveaux différents dans l'épaisseur dudit tronçon de bande.

Une des extrémités dudit tronçon de bande peut comporter au moins une demi-dent et une dent tronquée inférieure, et l'autre extrémité peut comporter en correspondance au moins une demi-dent et une dent tronquée supérieure formant des dentures d'emboitement en escalier.

En outre et en fonction de la largeur de ladite courroie, une des extrémités dudit tronçon de bande peut comporter un nombre X de demi-dents et un nombre Y de dents tronquées inférieures, et l'autre extrémité peut comporter en correspondance un nombre X de demi-dents et un nombre Y de dents tronquées supérieures, lesdites demi-dents et lesdites dents tronquées étant alternées.

Les deux orifices transversaux prévus dans chacune des extrémités dudit tronçon de bande peuvent en outre être décalés dans le sens longitudinal de ladite courroie.

Dans toutes les variantes de réalisation, l'âme de traction comporte avantageusement des spires ou des boucles longitudinales de câble de traction enroulées au moins en partie autour des tiges de verrouillage dudit dispositif de jonction.

Les brins des spires ou boucles longitudinales dudit câble de traction sont préférentiellement tous disposés côte à côte dans un même plan, sans se superposer, ce plan étant confondu avec le plan de la fibre neutre de ladite courroie. Selon les variantes de réalisation, l'axe des tiges de verrouillage est aligné dans ledit plan de la fibre neutre, ou les tiges de verrouillage sont réparties de part et d'autre dudit plan de la fibre neutre.

### Brève description des figures

La présente invention et ses avantages apparaîtront mieux dans la description suivante de plusieurs modes de réalisation donnés à titre d'exemples non limitatifs, en référence aux dessins annexés, dans lesquels:
[Fig 1] la figure 1 est une vue éclatée en perspective des extrémités d'une courroie et d'un premier dispositif de jonction selon une première forme de réalisation de l'invention,
[Fig 2] la figure 2 est une vue en perspective des extrémités de la courroie de la figure 1 en cours d'assemblage,
[Fig 3] la figure 3 est une vue de face en transparence de la courroie de la figure 1 assemblée,
[Fig 4] la figure 4 est une vue de face éclatée de la courroie de la figure 1 avec un deuxième dispositif de jonction,
[Fig 5] la figure 5 est une vue de face de la courroie de la figure 1 avec un troisième dispositif de jonction,
[Fig 6] la figure 6 est une vue de dessus éclatée et en transparence de la courroie de la figure 1,
[Fig 7A] la figure 7A est une vue éclatée en perspective des extrémités d'une courroie et d'un dispositif de jonction selon une seconde forme de réalisation de l'invention, prise d'une des extrémités,
[Fig 7B] la figure 7B est une vue similaire à la figure 7A prise de l'autre extrémité, [Fig 8] la figure 8 est une vue en perspective des extrémités de la courroie des figures 7A et 7B en cours d'assemblage,
[Fig 9] la figure 9 est une vue de face en transparence des extrémités ouvertes de la courroie des figures 7A et 7B, sans dispositif de jonction, et
[Fig 10] la figure 10 est une de face en transparence des extrémités assemblées de la courroie des figures 7A et 7B.

### Description détaillée de l'invention

Dans les exemples de réalisation illustrés, les éléments ou parties identiques portent les mêmes numéros de référence.

En référence aux figures, la courroie 10, 100 de transmission de puissance selon l'invention est une courroie crantée ouverte pourvue d'un dispositif de jonction 20, 200 mécanique permettant d'ouvrir et de fermer ladite courroie de manière simple et rapide. La courroie de transmission et le dispositif de jonction sont réalisés de telle sorte que, lors de la mise en tension de la courroie, aucune déformation ne modifie ni le profil cranté de la courroie, ni le pas entre les dents pour garantir son engrènement avec des pignons dentés, des poulies dentées ou des poulies crantées d'une transmission mécanique, dénommés par un terme générique « poulie » sans que ce terme ne soit limitatif. Les poulies (non représentées) peuvent être ou non équipées de moyens de guidage transversal de la courroie, tels qu'une nervure centrale et/ou un ou deux flasques latéraux.

La courroie de transmission 10, 100 ouverte, appelée par la suite « courroie », est fermée en boucle par au moins un dispositif de jonction 20, 200 autour d'au moins deux poulies (non représentées) d'une transmission mécanique pouvant appartenir à un véhicule, une machine, une installation, et tout équipement nécessitant une transmission de puissance entre deux organes tournants, dans tout type d'applications domestiques, artisanales, industrielles. Le principe de l'invention consiste à concevoir une courroie de transmission identique sur toute une plage de dimensions et d'efforts à transmettre correspondants auxdites dimensions, selon un pas pouvant aller de 8M à 32M, sur une largeur de bande de 12mm à 125mm, avec au moins un dispositif de jonction démontable. Ces valeurs ne sont données qu'à titre indicatif et ne sont aucunement limitatives.

La courroie 10, 100 n'est représentée que partiellement dans les figures, puisque seules ses parties d'extrémité sont illustrées pour simplifier les dessins. Elle comporte de manière connue une face lisse 11 et une face crantée 12 formée par une succession de crans 13 séparés d'un pas P régulier correspondant à celui des poulies, et délimitant entre eux des dents 14. Bien entendu, le profil cranté de la courroie 10, 100 est conçu pour épouser parfaitement le profil denté des poulies afin d'assurer un engrènement sans glissement. Selon le procédé de l'invention, la courroie 10, 100 est réalisée à partir d'un tronçon 15 d'une bande de matière, appelé par la suite « tronçon de bande 15 », ouvert et dont les extrémités sont assemblées par un dispositif de jonction 20, 200 pour fermer la courroie 10, 100. En fonction de sa longueur, elle peut aussi être réalisée à partir de plusieurs tronçons de bande 15, assemblés bout à bout par plusieurs dispositifs de jonction 20, 200. Dans ce cas, il faudra prévoir un nombre N de dispositifs de jonction 20, 200 égal au nombre N de tronçons de bande 15.

Le tronçon de bande 15 peut être fabriqué dans une matière synthétique, thermoplastique ou thermodurcissable, telle qu'un polyuréthane (PU), un composé de polyuréthane, un caoutchouc naturel ou synthétique type néoprène®, ou toute matière équivalente qui a des propriétés similaires, à savoir notamment légèreté, souplesse, robustesse, grande résistance à la fatigue. Le tronçon de bande 15 peut être recouvert en partie ou en totalité par un revêtement pouvant contribuer à diminuer le coefficient de friction, réduisant l'abrasion, et à diminuer le bruit, tout en augmentant la durée de vie de la courroie. Ce revêtement peut être un textile de renfort ou similaire. Ce tronçon de bande 15 peut être fabriqué par extrusion sous la forme d'une bande de matière continue, coupée à la largeur et/ou à la longueur voulue(s), ou par moulage, injection, ou thermoformage à la largeur et/ou à la longueur voulue(s). Bien entendu, toute autre technique de fabrication équivalente peut convenir. On privilégiera toutefois une fabrication par un procédé de moulage pour pouvoir intégrer l'âme de traction et son agencement particulier.

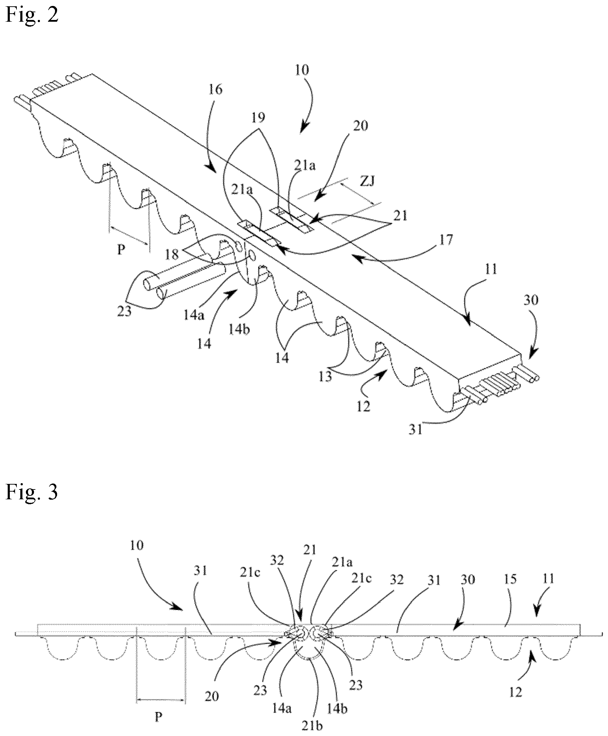

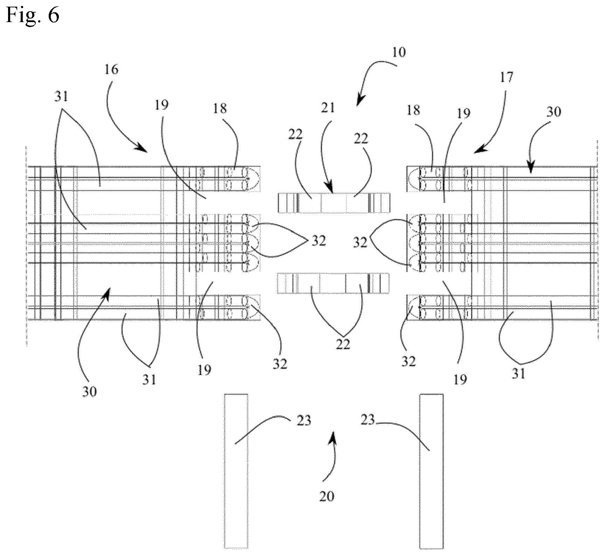

Dans tous les cas, le tronçon de bande 15 comporte une âme de traction 30 noyée dans son épaisseur pour obtenir une courroie renforcée. L'âme de traction 30 est disposée impérativement au centre de l'épaisseur du tronçon de bande 15, plus particulièrement dans un plan longitudinal médian de ladite courroie qui correspond à la fibre neutre de la courroie 10, 100, juste au-dessus de la face crantée 12 (fig. 3, 4, 8, 9 et 10). On appelle « fibre neutre », le plan longitudinal médian dans lequel la longueur des fibres est invariable quelle que soit le rayon de courbure de la courroie. Pour atteindre cet objectif, les brins 31 des spires ou boucles longitudinales 32 du ou des câbles de traction formant l'âme de traction 30 sont tous disposés côte à côte dans un même plan, sans se superposer (voir figure 6), ce plan étant confondu avec ladite fibre neutre de la courroie. Ainsi, la longueur des brins 31 de l'âme de traction 30 est également invariable quel que soit le rayon de courbure de ladite courroie.

On entend par « âme de traction 30 », un ou plusieurs fils ou câbles, individuels ou assemblés en toron ou en nappe, torsadés, tressés ou tissés, en matières textiles et/ou métalliques. Dans une variante non représentée, les spires longitudinales de l'âme de traction 30 pourraient être assemblées entre elles par une trame transversale formant avec elles un treillis. Cette âme de traction 30 doit adhérer à la matière thermoplastique ou thermodurcissable du tronçon de bande 15 et présenter une excellente résistance à la traction, une grande souplesse, un allongement minimum voire nul, une bonne résistance à la flexion. On privilégiera les filaments continus synthétiques aux fils métalliques, sans que cet exemple ne soit limitatif. On peut citer, à titre d'exemple, les matières suivantes : les fibres en Kevlar®, carbone, acier, inox, sans que cette liste ne soit limitative.

Le tronçon de bande 15 est terminé par deux extrémités 16, 17 ; 160, 170 libres, agencées pour être assemblées et liées solidairement entre elles au moins temporairement par un dispositif de jonction 20, 200. L'invention est remarquable en ce que le dispositif de jonction 20, 200 est prévu pour s'intégrer dans une seule dent 14 de la courroie 10, 100, réduisant à son minimum la longueur de la zone de jonction ZJ et son impact sur les propriétés mécaniques et le fonctionnement de la courroie. A cet effet, les extrémités 16, 17 ; 160, 170 de la bande matière 15 comportent chacune une partie d'une dent 14.

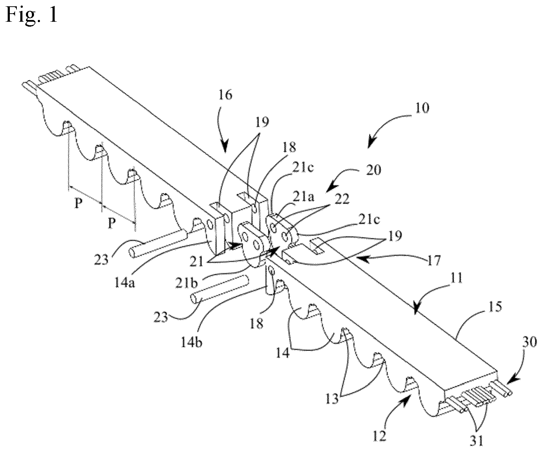

Dans le premier mode de réalisation de l'invention en référence aux figures 1 à 6, les extrémités 16, 17 du tronçon de bande 15 de la courroie 10 sont droites et comportent chacune une demi-dent 14a, 14b. Ainsi, lorsque les extrémités 16, 17 sont assemblées, les deux demi-dents 14a, 14b sont en contact plan selon un plan de joint confondu avec l'axe de symétrie de la dent 14 qui est reconstituée et qui est identique aux autres dents 14. Les extrémités 16, 17 comportent en outre chacune un orifice transversal 18, s'étendant perpendiculairement à l'axe longitudinal de la courroie 10. Les deux orifices transversaux 18 débouchent sur au moins un des flancs de la courroie 10. Ils sont situés dans l'épaisseur du tronçon de bande 15 entre le fond de crans 13 et la face lisse 11. L'axe des orifices transversaux 18 est dans un plan parallèle et préférentiellement confondu au plan longitudinal de la fibre neutre de la courroie 10. Les extrémités 16, 17 comportent enfin des encoches 19, par exemple en forme de U, débouchantes dans la zone de jonction ZJ, s'étendant sur toute la hauteur desdites extrémités 16, 17, intégrées dans la largeur du tronçon de bande 15, et réparties de préférence symétriquement par rapport à l'axe longitudinal médian du tronçon de bande 15.

Le dispositif de jonction 20 comporte un ou plusieurs maillons de liaison 21, 24, 25 en fonction de la largeur de la courroie 10. Le nombre de maillons de liaison peut être pair ou impair. Dans l'exemple illustré aux figures 1 à 3, il comporte deux maillons de liaison 21 totalement intégrés à l'intérieur de la largeur du tronçon de bande 15 pour s'escamoter complètement par rapport aux différentes faces du tronçon de bande 15 et n'interférer en aucune manière avec l'environnement de la courroie et notamment avec les poulies sur lesquelles la courroie engrène. Ils sont constitués de maillons fermés et identiques. Ils présentent avantageusement une forme complémentaire à la dent 14 de la zone de jonction ZJ, ce qui renforce leur résistance mécanique par rapport à des maillons classiques du commerce. Ils comportent deux œillets 22, parallèles et situés sur un même niveau. L'axe des œillets 22 est situé sur un plan parallèle, préférentiellement confondu avec le plan de la fibre neutre de la courroie 10. La forme des maillons de liaison 21 s'inscrit dans un triangle et comporte un bord supérieur 21a plan agencé pour se confondre dans le plan de la face lisse 11 du tronçon de bande, ou pour être légèrement en retrait, un bord inférieur 21b courbe agencé pour se confondre avec le profil courbe de la dent 14 reconstituée après assemblage des extrémités 16, 17, ou pour être légèrement en retrait. Le bord supérieur 21a et le bord inférieur 21b sont raccordés par deux oreilles 21c dans lesquelles sont prévus les œillets 22. Comme illustré à la figure 3, le bord inférieur 21b courbe des maillons de liaison 22 est légèrement en retrait par rapport au profil de la dent 14 reconstituée, pour éviter toute interférence avec les poulies.

Le dispositif de jonction 20 comporte en outre deux tiges de verrouillage 23 agencées pour s'introduire simultanément dans les orifices transversaux 18 des extrémités 16, 17 du tronçon de bande 15 et des œillets 22 lorsque les maillons de liaison 21 sont emboités dans les encoches 19. La largeur des maillons de liaison 21 correspond de préférence à la largeur des encoches 19 pour assurer un assemblage serré. De même, le diamètre des tiges de verrouillage 23 correspond de préférence au diamètre des orifices transversaux 18 et au diamètre des œillets 22 pour assurer là encore un assemblage serré. On appelle « tige de verrouillage », un axe de préférence métallique, fixe ou amovible selon le type de dispositif de jonction, de section cylindrique ou non, de surface lisse, filetée, pourvue d'un relief ou crantée, avec ou sans tête, en une seule partie ou en deux parties montées tête-bêche, ces exemples n'étant pas limitatifs.

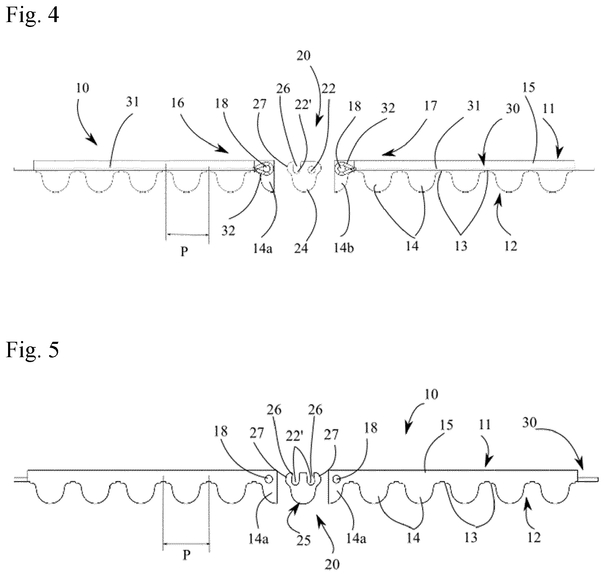

Le dispositif de jonction 20 peut comporter, selon les modes de réalisation, des maillons de liaison 21 fermés, comme ceux illustrés dans les figures 1 à 3, dans lesquels les œillets 22 sont délimités par une paroi périphérique fermée. Les maillons de liaison 21 fermés sont compatibles soit avec deux tiges de verrouillage 23 amovibles, soit avec une tige de verrouillage 23 amovible et une tige de verrouillage 23 fixe qui est solidarisée à l'une des extrémités 16, 17 emprisonnant lesdits maillons lors de la fabrication dudit tronçon de bande 15. Le dispositif de jonction 20 peut également comporter des maillons de liaison 24 semi-ouverts en référence à la figure 4 ou des maillons de liaison 25 ouverts en référence à la figure 5. En référence à la figure 4, les maillons de liaison 24 semi-ouverts comportent un œillet 22 fermé, et un œillet 22' ouvert sur une fente 26 délimitant une griffe 27, et sont compatibles avec des tiges de verrouillage 23 amovibles et/ou fixes. On peut privilégier deux tiges de verrouillage 23 fixes qui peuvent être intégrées dans chacune des extrémités 16, 17 du tronçon de bande 15 lors de sa fabrication et de préférence surmoulée pour être noyée dans l'épaisseur du tronçon de bande 15. Dans ce cas, les maillons de liaison semi-ouverts 24 sont emprisonnés avec une des tiges de verrouillage 23 dans une des extrémités 16, 17. En référence à la figure 5, les maillons de liaison 25 ouverts comportent deux œillets 22' ouverts chacun sur une fente 26 délimitant une griffe 27. Ces maillons de liaison 25 ouverts sont donc compatibles aussi bien avec des tiges de verrouillage 23 amovibles que fixes. Là encore, on privilégiera des tiges de verrouillage 23 fixe qui peuvent être intégrées dans chacune des extrémités 16, 17 du tronçon de bande 15 lors de sa fabrication. L'intégration d'une ou des deux tiges de verrouillage 23 dans les extrémités 16, 17 du tronçon de bande 15 permet de les lier définitivement à la courroie 10 et de ne pas les perdre. Il en est de même lorsqu'il est possible de lier les maillons de liaison 21, 24 par l'un de leurs œillets 22 à l'une des tiges de verrouillage 23 fixe.

Les fentes 26 contenues dans les maillons de liaison 24 semi-ouverts et 25 ouverts sont de préférence légèrement inclinées vers l'axe vertical de symétrie dudit maillon, de sorte que leurs axes croisent l'axe de symétrie au-delà du bord supérieur dudit maillon. Ainsi, les fentes 26 délimitent avec l'extrémité correspondante des maillons, une sorte de griffe 27 favorisant un verrouillage automatique du maillon lorsqu'il est emboité sur les tiges de verrouillage 23, et évitant toute sortie accidentelle du maillon. Le verrouillage est également obtenu grâce à la tension exercée sur la courroie qui bloque les maillons de liaison 24, 25 grâce à l'inclinaison des griffes 27. Bien entendu, la forme des maillons de liaison 21, 24, 25 n'est pas limitée à ces modes de réalisation, mais s'étend à toute autre forme compatible avec la courroie crantée et les poulies dentées de la transmission mécanique concernée.

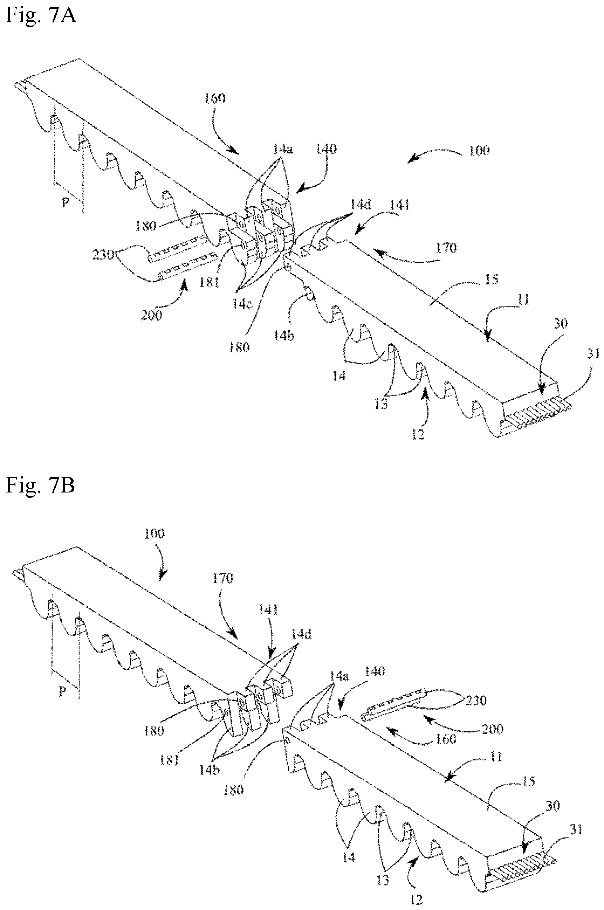

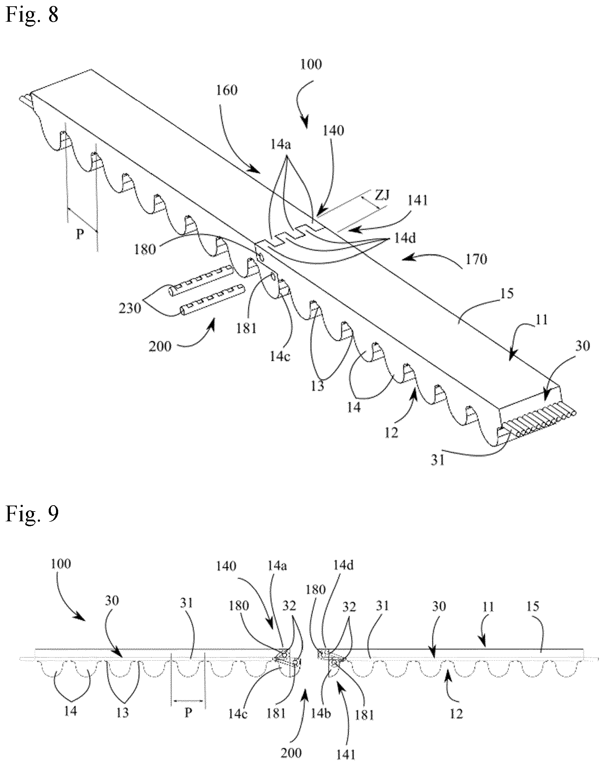

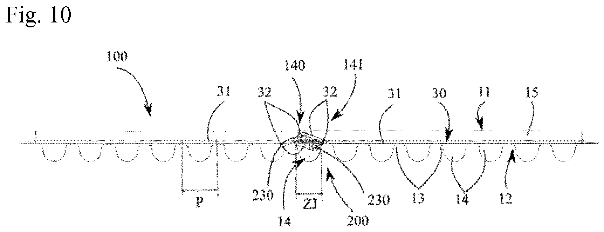

Dans le second mode de réalisation de l'invention en référence aux figures 7A à 10, les extrémités 160, 170 du tronçon de bande 15 de la courroie 100 se terminent chacune par une dent 14 qui est découpée pour former une denture d'emboitement 140, 141 en escalier. Les figures 7A, 7B et 9 montrent très clairement chacune de ces extrémités 160, 170 qui comportent une denture d'emboitement 140, 141 de forme complémentaire, permettant de reconstituer une seule dent 14 lorsqu'elles sont assemblées (voir figures 8 et 10). Plus particulièrement, l'extrémité 160 comporte trois demi-dents 14a alternées avec trois dents tronquées 14c inférieures, c'est-à-dire qui ne comportent que la partie de la dent située en-dessous de la fibre neutre. Et l'extrémité 170 comporte trois demi-dents 14b alternées avec trois dents tronquées 14d supérieures, c'est-à-dire qui ne comportent que la partie de la dent située au-dessus de la fibre neutre. Lorsque les deux extrémités 160, 170 sont assemblées, les demi-dents 14a, 14b se font face et sont en contact plan selon un plan de joint confondu avec l'axe de symétrie de la dent 14 qui est en partie reconstituée, et les dents tronquées 14c, 14d se superposent entre-elles et s'emboitent entre les demi-dents 14a, 14b pour reconstituer la partie manquante de la dent 14, et recréer une dent 14 sur toute la largeur de la courroie 100 (figures 8 et 10).

Les extrémités 160, 170 comportent dans chacune de leur denture d'emboitement 140, 141, deux orifices transversaux 180, 181, qui s'étendent perpendiculairement à l'axe longitudinal de la courroie 100 sur deux niveaux dans l'épaisseur du tronçon de bande 15. Ils peuvent en outre être décalés dans le sens longitudinal dudit tronçon de bande 15, comme illustré dans les figures, sans que ce décalage longitudinal ne soit obligatoire. Un premier orifice transversal 180 se situe à un niveau dit haut, de préférence au-dessus de la fibre neutre de la courroie 100 et qui traversent la partie supérieure des demi-dents 14a de la denture d'emboitement 140 et les dents tronquées 14d supérieures de la denture d'emboitement 141. Un second orifice transversal 181 se situe à un niveau dit bas, de préférence en-dessous de la fibre neutre de la courroie 100 et qui traversent les dents tronquées 14c inférieures de la denture d'emboitement 140 et la partie inférieure des demi-dents 14b de la denture d'emboitement 141. Les deux orifices transversaux 180, 181 débouchent sur au moins un des flancs de la courroie 100.

Le dispositif de jonction 200 compatible avec la courroie 100 ne comporte que deux tiges de verrouillage 230. Une des tiges de verrouillage 230 est agencée pour s'introduire dans les orifices transversaux 180 « haut », traversant alternativement les dentures d'emboitement 140, 141. L'autre tige de verrouillage 230 est agencée pour s'introduire dans les orifices transversaux 181 « bas », traversant alternativement les dentures d'emboitement 140, 141. Le diamètre des tiges de verrouillage 230 correspond de préférence au diamètre des orifices transversaux 180, 181 pour assurer un assemblage serré. Dans ce mode de réalisation, on appelle « tige de verrouillage », un axe de préférence métallique, exclusivement amovible, de section cylindrique ou non, de surface lisse, filetée, pourvue d'un relief ou crantée, avec ou sans tête, en une seule partie ou en deux parties montées tête-bêche, ces exemples n'étant pas limitatifs.

Le fait que la zone de jonction ZJ soit contenue dans une seule dent 14 permet de conserver intacts les points d'inflexion naturels de la courroie 10, 100 sur toute la longueur de la courroie 10, 100 y compris dans sa zone de jonction ZJ. En effet, lorsque la courroie s'enroule autour des poulies, chaque dent se comporte comme un segment droit qui pivote l'un par rapport à l'autre pour suivre la courbe des poulies autour d'un point de flexion qui se situe au fond du creux 13 séparant chaque paire de dents 14. En outre, le fait que la zone de jonction ZJ soit contenue dans une seule dent 14 permet également d'éviter les micro-j eux induits par le dispositif de jonction 20, 200 risquant de modifier très légèrement le pas P dans cette zone. En effet, les pièces qui constituent le dispositif de jonction 20 ne subissent aucun mouvement de rotation relatif entre elles puisqu'elles sont contenues dans une dent 14 laquelle se comporte comme un segment droit qui ne subit aucune déformation lorsqu'elle engrène les dents d'une poulie.

Lors de la mise en tension de la courroie 10, 100 selon l'invention, elle ne doit subir aucune déformation dans sa zone de jonction ZJ qui risquerait de modifier le pas P avec comme conséquence de détruire la courroie 10, 100 en quelques tours puisqu'elle n'engrènerait plus correctement les poulies 1. Ainsi, la position des tiges de verrouillage 23, 230 dans les extrémités 16, 17 ; 160, 170 du tronçon de bande 15 est également déterminante, tout comme la position de l'âme de traction 30.

Dans le premier mode de réalisation en référence aux figures 1 à 6, la solution de l'invention consiste à positionner ou à aligner l'axe des tiges de verrouillage 23 donc l'axe des orifices transversaux 18 dans le même plan que l'âme de traction 30, ce plan étant confondu avec le plan longitudinal médian de la courroie 10 qui correspond à la fibre neutre de la courroie 10 (fig. 3 et 4). Dans le second mode de réalisation en référence aux figures 7A à 10, l'axe des tiges de verrouillage 230 et donc l'axe des orifices transversaux 180, 181 ne sont pas alignés dans le plan de la fibre neutre de la courroie 100, mais sont répartis uniformément de part et d'autre permettant d'équilibrer et donc de compenser les efforts, n'ayant ainsi aucun effet ni sur la fibre neutre de la courroie 100, ni sur le pas P (fig. 9 et 10). Dans toutes les formes de réalisation de l'invention, le câble de traction qui forme l'âme de traction 30 est enroulé au moins en partie autour des tiges de verrouillage 23, 230 et forment des boucles de renfort très efficaces assurant une continuité mécanique dans la zone de jonction ZJ et empêchant tout risque d'allongement de la courroie 10, 100 dans la zone de jonction ZJ. Cet agencement particulier de l'âme de traction 30 peut être réalisé lors de la fabrication du tronçon de bande 15 par moulage, notamment dans une empreinte contenant des broches pour créer les orifices traversants 18, 180, 181 et/ou l'une ou les deux tiges de verrouillage 23 autour desquelles le ou les câbles de traction sont enroulés au moins en partie avant le coulage de la matière.

La présente invention n'est bien entendu pas limitée aux exemples de réalisation décrits mais s'étend à toute modification et variante évidentes pour un homme du métier.

## Revendications

1. Courroie (10, 100) de transmission de puissance comportant sur au moins l'une de ses faces des dents (14) séparées d'un pas (P) régulier pour former une face crantée (12) agencée pour engrener des poulies dentées d'une transmission mécanique, ladite courroie comportant au moins un tronçon de bande (15) délimité par deux extrémités (16, 17 ; 160, 170), ledit tronçon de bande étant pourvu de ladite au moins une face crantée (12) et d'une âme de traction (30) noyée dans son épaisseur pour obtenir une courroie renforcée, ladite courroie comportant en outre au moins une zone de jonction (ZJ) comportant un dispositif de jonction (20, 200) au moins en partie démontable, agencé pour assembler entre-elles les extrémités dudit tronçon de bande et former une courroie ayant deux états d'utilisation: un état ouvert dans lequel les extrémités dudit tronçon de bande ne sont pas assemblées, et un état fermé dans lequel les extrémités dudit tronçon de bande sont assemblées par ledit dispositif de jonction, **caractérisée en ce que** ladite au moins une zone de jonction (ZJ) s'étend sur une seule dent (14) de la courroie, et **en ce que** ledit dispositif de jonction (20, 200) est contenu dans ladite seule dent (14) et comporte deux tiges de verrouillage (23, 230) qui s'étendent transversalement dans l'épaisseur de ladite seule dent (14) de la zone de jonction (ZJ).

2. Courroie (10, 100) selon la revendication 1, **caractérisée en ce que** les extrémités (16, 17 ; 160, 170) de ladite bande matière (15) comportent chacune une partie de la seule dent (14) de ladite zone de jonction (ZJ).

3. Courroie (10) selon la revendication 2, **caractérisée en ce que** les extrémités (16, 17) dudit tronçon de bande (15) sont droites et comportent chacune une demi-dent (14a, 14b) permettant de reconstituer la seule dent (14) de ladite zone de jonction (ZJ) lorsque lesdites extrémités sont assemblées.

4. Courroie (10) selon la revendication 3, **caractérisée en ce que** ledit dispositif de jonction (20) comporte au moins un maillon de liaison (21, 24, 25) pourvu de deux œillets (22, 22'), et deux tiges de verrouillage (23), et **en ce que** les extrémités (16, 17) dudit tronçon de bande (15) comportent chacune au moins une encoche (19) débouchante dans ladite zone de jonction (ZJ) pour former un logement de réception dudit au moins un maillon de liaison (21, 24, 25), et un orifice transversal (18) pour recevoir une des tiges de verrouillage (23) dudit dispositif de jonction (20) et solidariser ledit au moins un maillon de liaison (21, 24, 25) auxdites extrémités (16, 17).

5. Courroie (10) selon la revendication 4, **caractérisée en ce que** ladite au moins une encoche (19) est disposée à l'intérieur de la largeur dudit tronçon de bande (15).

6. Courroie (10) selon la revendication 4, **caractérisée en ce que** ledit dispositif de jonction (20) comporte un nombre X de maillons de liaison (21, 24, 25) et deux tiges de verrouillage (23), et **en ce que** les extrémités (16, 17) dudit tronçon de bande (15) comportent chacune un nombre X d'encoches (19) parallèles.

7. Courroie (10) selon la revendication 4, **caractérisée en ce que** ledit maillon de liaison est choisi parmi un maillon de liaison fermé (21) pourvu de deux œillets fermés (22), un maillon de liaison semi-ouvert (24) pourvu d'un œillet fermé (22) et d'un œillet ouvert (22'), et un maillon de liaison ouvert (25) pourvu de deux œillets ouverts (22').

8. Courroie (10) selon la revendication 7, **caractérisée en ce que** ledit dispositif de jonction (20) comporte au moins une tige de verrouillage (23) fixe, solidarisée à l'une des extrémités (16, 17) dudit tronçon de bande (15).

9. Courroie (100) selon la revendication 2, **caractérisée en ce que** les extrémités (160, 170) dudit tronçon de bande (15) comportent chacune une dent (14) découpée pour former une denture d'emboitement (140, 141), lesdites dentures d'emboitement ayant une forme d'emboitement complémentaire permettant de reconstituer la seule dent (14) de ladite zone de jonction (ZJ) lorsque lesdites extrémités sont assemblées.

10. Courroie (100) selon la revendication 9, **caractérisée en ce que** ledit dispositif de jonction (200) comporte deux tiges de verrouillage (230), et **en ce que** lesdites dentures d'emboitement (140), 141) comportent chacune deux orifices transversaux (180, 181) s'étendant sur deux niveaux différents dans l'épaisseur dudit tronçon de bande (15).

11. Courroie (100) selon la revendication 10, **caractérisée en ce qu'**une des extrémités (160) comporte au moins une demi-dent (14a) et une dent tronquée inférieure (14c), et **en ce que** l'autre extrémité (170) comporte en correspondance au moins une demi-dent (14b) et une dent tronquée supérieure (14d) formant des dentures d'emboitement (140, 141) en escalier.

12. Courroie (100) selon la revendication 11, **caractérisée en ce qu'**une des extrémités (160) comporte un nombre X de demi-dents (14a) et un nombre Y de dents tronquées inférieures (14c), et **en ce que** l'autre extrémité (170) comporte en correspondance un nombre X de demi-dents (14b) et un nombre Y de dents tronquées supérieures (14d), lesdites demi-dents et lesdites dents tronquées étant alternées.

13. Courroie (100) selon la revendication 10, **caractérisée en ce que** les deux orifices transversaux (180, 181) prévus dans chacune des extrémités (160, 170) dudit tronçon de bande (15) sont en outre décalés dans le sens longitudinal de ladite courroie (100).

14. Courroie (10, 100) selon l'une quelconque des revendications précédentes, **caractérisée en ce que** l'âme de traction (30) comporte des spires ou des boucles longitudinales (32) de câble de traction enroulées au moins en partie autour des tiges de verrouillage (23, 230) dudit dispositif de jonction (20, 200).

15. Courroie (10) selon la revendication 14, **caractérisée en ce que** les brins (31) des spires ou boucles longitudinales (32) dudit câble de traction sont tous disposés côte à côte dans un même plan, sans se superposer, ce plan étant confondu avec le plan de la fibre neutre de la courroie (10, 100), et **en ce que** l'axe desdites tiges de verrouillage (23) est aligné dans ledit plan de la fibre neutre.

16. Courroie (100) selon la revendication 14, **caractérisée en ce que** les brins (31) des spires ou boucles longitudinales (32) dudit câble de traction sont tous disposés côte à côte dans un même plan, sans se superposer, ce plan étant confondu avec le plan de la fibre neutre de la courroie (10, 100), et **en ce que** lesdites tiges de verrouillage (230) sont réparties de part et d'autre dudit plan de la fibre neutre.
